# EUROPÄISCHE PATENTSCHRIFT

(11) **EP 0 374 485 B1**
(45) Veröffentlichungstag und Bekanntmachung des Hinweises auf die Patenterteilung: **16.06.1993**
(21) Anmeldenummer: 89121286.2
(22) Anmeldetag: 17.11.1989
(51) Int. Cl.: B60T 13/12, B60T 8/44, B60T 8/48

(54) **Bremsanlage**
Brake system
Système de freinage

(30) Priorität: 15.12.1988 DE 3842225
(43) Veröffentlichungstag der Anmeldung: 27.06.1990
(73) Patentinhaber: ROBERT BOSCH GMBH, 70442 Stuttgart (DE)
(72) Erfinder: Siegel Heinz, Ing., D-7000 Stuttgart 40 (DE)

(56) Entgegenhaltungen:
- DE-A- 3 241 662
- DE-A- 3 323 218
- DE-A- 3 700 697
- DE-A- 3 723 842
- DE-A- 3 723 915
- PATENT ABSTRACTS OF JAPAN, Band 10, Nr. 196 (M-497)[2252], 10. Juli 1986;& JP-A-61 041 654 (NIPPON DENSO) 28-02-1986
- IDEM
- PATENT ABSTRACTS OF JAPAN, Band 9, Nr. 46 (M-360)[1769], 27. Februar 1985; JP-A-59 186 755 (MAZDA) 23-10-1984
- PATENT ABSTRACTS OF JAPAN, Band 9, Nr. 238 (M-416)[1961], 25. September 1985;& JP-A-60 092 151 (MAZDA) 23-05-1985

## Beschreibung

### Stand der Technik

Die Erfindung betrifft eine Bremsanlage mit einem als hydraulischen Verstärker ausgebildeten Hauptbremszylinder gemäß der Gattung des Hauptanspruchs.

Derartige Bremsanlagen umfassen heute in der Regel zwei Bremskreise, in die vorzugsweise entsprechende Magnetventile für eine Antiblockierregelung eingeschaltet sind. Bevorzugt wird ferner auch das Vorsehen einer Antriebsschlupfregelung. Wesentlich ist bei einer solchen Bremsanlage, daß zum einen die Zuführung von Steuerflüssigkeit gezielt gesteuert und, falls vorhanden, mit den Magnetventilen der Antiblockier- und Antriebsschlupfregelung in Einklang gebracht werden.

Beispielsweise ist aus der DE-PS 32 41 662 eine hydraulische, mit Bremskraft betätigbare Bremsanlage bekannt, bei der die Einschaltung der Magnetventile zur Zuführung von Steuerflüssigkeit anhand eines zwischen Kolbenstange und Servokolben angeordneten Gebers gesteuert wird. Zwischen Kolbenstange und Servokolben ist jedoch nur ein geringer Hub möglich. Ferner erfolgt eine Steuerung der Zugabe der Steuerflüssigkeit entsprechend dem Pedalweg, wobei der Weg selbst (Stangen-und Servokolben- bzw. Hauptzylinderkolbenweg) nicht sensiert wird.

### Vorteile der Erfindung

Mit einer Bremsanlage entsprechend den Merkmalen des Hauptanspruches wird dagegen gerade dieser Weg des Hauptzylinderkolbens und der Kolbenstange selbst beobachtet und über eine entsprechende Elektronik zu Steuersignalen verarbeitet. Damit ist der vom Fahrer erzeugte Pedalweg von dem Servokolbenweg bzw. dem Hauptzylinderkolbenweg entkoppelt. Diese Entkoppelung von Kolbenstange und Servokolben hat wesentliche Vorteile für die ASR-Regelung, da der Servokolben bei stehender Kolbenstange betrieben werden kann, wie später beschrieben wird. Nach wie vor wird der Wunsch des Fahrers, der sich im auf das Bremspedal aufgebrachten Bremsdruck ausdrückt, durch den einen Geber ermittelt, es erfolgt jedoch davon unabhängig die Ermittlung des Istweges des Hauptzylinderkolbens durch den zweiten Geber.

Beide Eingangssignale der Geber werden von einer entsprechenden Elektronik aufgenommen und verarbeitet. Von dieser Elektronik gelangen dann die entsprechenden Ausgangssignale zu einem Magnetventil für die Zuführung von Steuerflüssigkeit. Stimmt beispielsweise der Weg des Hauptzylinderkolbens mit dem vorgegebenen Weg der Kolbenstange überein, so wird das Magnetventil in die Haltestellung gebracht, so daß kein weiterer Aufbau eines Servodruckes erfolgt.

Das Magnetventil kann im übrigen beispielsweise aus einem 3/3-Wege-Magnetventil bestehen, über welches der entsprechende Stellkolbenraum entweder abgesperrt oder aber mit dem Vorratsbehälter für Steuerflüssigkeit oder mit einem Druckspeicher oder einer entsprechenden Förderpumpe in Verbindung gebracht wird. Bevorzugt werden allerdings zwei 2/2-Wege-Magnetventile, wobei eines in eine Leitung zum Vorratsbehälter und das andere in die Leitung zum Druckspeicher bzw. der Förderpumpe eingeschaltet ist. Dadurch, daß diese Magnetventile über die Geber elektrisch angesteuert werden, besteht wenig Reibung zwischen Kolbenstange und Hauptzylinderkolben, wie dies sonst bei bekannten Servobremskraftverstärkern der Fall ist. Die auf das Bremspedal aufzubringende Anfangskraft kann somit niedrig gehalten werden, was von den Automobilherstellern erwünscht ist.

Als Geber kommen beispielsweise entsprechende Potentiometer in Betracht. Bevorzugt werden jedoch induktive Geber, welche selbst in dem Verstärker integriert sind. Dabei wird besonders bevorzugt, daß die Geber achsparallel mit dem Hauptzylinderkolben geführt sind. Hierdurch wird die Baulänge des Verstärkers so gering wie möglich gehalten. Beispielsweise kann vorgesehen sein, daß die Geber in entsprechenden Sacklochbohrungen achsparallel zu der Stufenbohrung geführt sind, in der auch der Hauptzylinderkolben gleitet. In diesen Sacklochbohrungen sind dann auch die entsprechenden Spulenpakete angeordnet, welche von den Gebern durchsetzt werden und welche das entsprechende elektrische Signal für die Elektronik erzeugen.

Beide Geber stützen sich bevorzugt in dieser Sacklochbohrung gegen Druckfedern ab, durchgreifen dann die Spulenpakete und treffen andererseits auf entsprechende radiale Fortsätze oder radiale Anschläge od. dgl. an der Kolbenstange bzw. dem Hauptzylinderkolben.

Wenn in der Bremsanlage auch ein ABS-Regelsystem mit mindestens einem offenen Regelkreis vorgesehen ist, muß aus Sicherheitsgründen bei einer ABS-Regelung der Hauptzylinderkolben gegen die Servo- und Fußkraft zurückgestellt werden. Deshalb sind gemäß der vorliegenden Erfindung dem Hauptzylinderkolben entsprechende Rückstelleinrichtungen zugeordnet. Diese Rückstelleinrichtung besteht zumindest aus einem Rückstellkolben, wobei jedoch zur Vermeidung von Kippkräften zwei symmetrisch angeordnete Rückstellkolben bevorzugt werden. Jeder Rückstellkolben steht unter dem Druck eines Druckmediums und beaufschlagt einen radialen Anschlag od. dgl. am Hauptzylinderkolben. Dieser radiale Anschlag kann beispielsweise um 90° gegenüber dem radialen Anschlag verdreht angeordnet sein, der von dem Geber angegriffen wird. Dabei bietet es sich an, daß die Rückstellkolben in ebenfalls achsparallel zur Hauptzylinderbohrung angeordneten Sacklochbohrungen im Verstärker geführt sind und dort sich auch die entsprechende Rückstellkammer zur Aufnahme des Druckmediums befindet.

Die Rückstellkammer steht in der Bremsanlage über ein Auslaßventil mit dem Vorratsbehälter und über ein Einspeisventil mit der Zuleitung zur Stellkolbenkammer in Verbindung. Dieses letztgenannte Einspeisventil schaltet bei einer ABS-Regelung auf Durchlaß von Steuerflüssigkeit, wobei das Auslaßventil sowie Radventile sperren. Auf diese Weise erfolgt dann die Rückführung des Hauptzylinderkolbens.

Während bei dem letztgenannten Ausführungsbeispiel die Antriebsschlupfregelung von der Elektronik gesteuert direkt aus dem Druckspeicher bzw. von der Förderpumpe erfolgt, soll in einem weiteren Ausführungsbeispiel der Erfindung in die Zuleitung zur Stellkolbenkammer ein weiteres Ventil eingeschaltet sein. Wird von einem der Radsensoren ein Schlupf eines Rades angezeigt, so sperrt dieses Ventil den Weg zum Stellkolbenraum ab, wobei auch weitere Ventile die Bremsleitungen zur jeweiligen Bremskammer im Hauptzylinder hin verschließen. Dagegen wird das oben genannte Einspeisventil geöffnet, über das dann Steuerflüssigkeit über entsprechende Rückschlagventile in die Bremsleitungen gelangen kann. Die Rückstellkolben befinden sich dabei in ihrer Endstellung.

In einer besonders bevorzugten Ausführungsform der Erfindung soll die Rückstelleinrichtung mit der Antriebsschlupfregelung verbunden sein. Hierzu sind die bereits oben erwähnten Rückstellkolben fest mit den radialen Anschlägen am Hauptzylinderkolben verbunden. Die Verbindung soll allerdings so erfolgen, daß ein bestimmter Leerhub zugelassen wird. Erfindungsgemäß besteht der Rückstellkolben in diesem Ausführungsbeispiel aus einem eigentlichen Kolbenteil und einer Stößelstange, mit der er an dem Hauptzylinderkolben festgelegt ist. Der Kolbenteil unterteilt die bereits oben erwähnte achsparallele Sacklochbohrung in eine Rückstellkammer und eine Arbeitskammer für die Antriebsschlupfregelung. Dabei durchgreift die Stößelstange eine Lippendichtung und eine Verschlußbuchse in der Sacklochbohrung.

Beim Auftreten des Falles einer Antriebsschlupfregelung genügt es in diesem Ausführungsbeispiel, die Arbeitskammern unter Druck zu setzen, so daß über die Rückstellkolben eine Längsführung des Hauptzylinderkolbens und damit ein Aufbau eines Bremsdruckes erfolgt. Der Vorteil dieses Ausführungsbeispiels ist vor allem darin zu sehen, daß die Servobremskraftverstärkung von der Antriebsschlupfregelung getrennt ist.

Die Zuführung von Druckmedium zur Arbeitskammer für die Antriebsschlupfregelung kann aus einem separten Kreis erfolgen. Bevorzugt wird allerdings die Verbindung der Arbeitskammer mit dem bereits vorhandenen Druckspeicher und dem Magnetventil für die Zuführung von Steuerflüssigkeit. In diesem Fall genügt es, ein entsprechendes Ventil in die Zuleitung für Steuerflüssigkeit zur Stellkolbenkammer einzuschalten, welches die Zuleitung in dem Augenblick versperrt, in dem eine Antriebsschlupfregelung stattfinden soll.

Da im vorliegenden Fall die Servokolbenbewegung von der Kolbenstangenbewegung durch die beiden Geber entkoppelt ist, können auch Zusatzinformationen verarbeitet bzw. ermittelt werden. Dies gilt beispielsweise für den Beladungszustand, Bremsenverschleiß, Bremskreisausfall, Griffigkeit Reifen/Fahrbahn.

### Zeichnung

Die Erfindung wird nachfolgend anhand der Zeichnung naher erläutert. Es zeigen:
Figur 1 einen Längsschnitt durch einen erfindungsgemäßen hydraulischen Verstärker mit einem blockschaltbildlich dargestellten Teil einer Bremsanlage;
Figur 2 einen Längsschnitt durch den Verstärker nach Figur 1 in einer anderen Schnittebene;
Figur 3 einen Längsschnitt durch ein anderes Ausführungsbeispiel eines Verstärkers nach Figur 1 in einer Schnittebene entsprechend Figur 2;
Figur 4 ein Blockschaltbild einer gesamten Bremsanlage in einer Ausführungsform mit getrennt dargestellten Schnittebenen des Verstärkers entsprechend Figur 1 und Figur 3;
Figur 5 ein Blockschaltbild einer gesamten Bremsanlage in einer weiteren Ausführungsform mit getrennt dargestellter Schnittebene des verstarkers entsprechend Figur 1 und Figur 2;
Figur 6 ein Blockschaltbild einer gesamten Bremsanlage in einer weiteren Ausführungsform mit getrennt dargestellter Schnittebene des Verstärkers entsprechend Figur 1 und Figur 2;
Figur 7 ein Blockschaltbild entsprechend Figur 5 mit entsprechender elektronischer Schaltung.

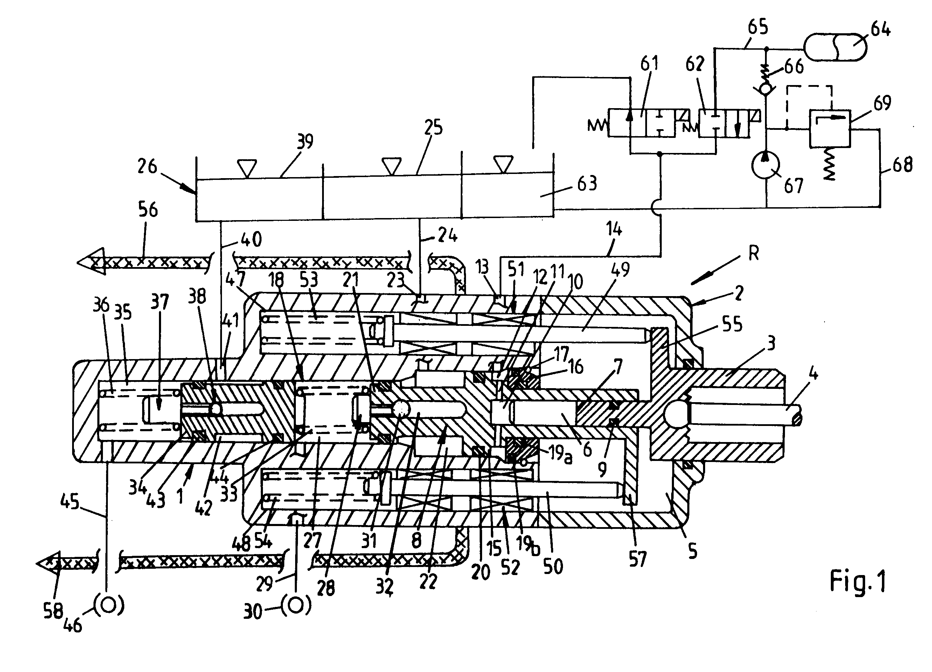

Ein hydraulischer Verstärker R besitzt gemäß Figur 1 ein Hauptzylindergehäuse 1 sowie ein Verschlußgehäuse 2. In das Verschlußgehäuse 2 greift eine Kolbenstange 3 ein, welche über eine eingebördelte Anlenkstange 4 mit einem in Figur 1 nicht näher dargestellten Bremspedal in Wirkverbindung steht. Über diese Anlenkstange 4 wird die Pedalbewegung auf die Kolbenstange 3 übertragen.

Innerhalb des Verschlußgehäuses 2 in einem von dem Verschlußgehäuse 2 gebildeten Innenraum 5 greift die Kolbenstange 3 mit einem Stößel 6 in eine Axialbohrung 7 eines Hauptzylinderkolbens 8 ein und gleitet in dieser Axialbohrung 7, welche gegenüber dem Innenraum 5 durch einen Dichtring 9 abgedichtet ist.

Durch den Stößel 6 wird in der Axialbohrung 7 eine volumenveränderliche Kammer 10 ausgebildet, welche über Radialbohrungen 11 im Hauptzylinderkolben 8 mit einem Stellkolbenraum 12 in Verbindung steht. Dieser Stellkolbenraum 12 kann über eine entsprechende Radialbohrung 13 im Hauptzylindergehäuse 1 durch eine Zuleitung 14 mit Bremsflüssigkeit beaufschlagt werden.

Der Stellkolbenraum 12 ist im übrigen zwischen einem Kolbenringteil 15 des Hauptzylinderkolbens 8 und einer Führungsbuchse 16 gebildet, wobei diese Führungsbuchse 16 von einem Sprengring 17 in einer Stufenbohrung 18 des Hauptzylindergehäuses 1 gehalten ist. Sowohl Kolbenringteil 15 wie auch Führungsbuchse 16 besitzen gegenüber dieser Stufenbohrung 18 entsprechende Dichtringe 19, 19a und 20.

Zwischen dem Kolbenringteil 15 und dem eigentlichen Bremskolbenteil 21 des Hauptzylinderkolbens 8 ist eine Ringkammer 22 ausgebildet, welche über eine entsprechende Bohrung 23 sowie eine Leitung 24 mit einer Kammer 25 eines Vorratsbehälters 26 für Bremsflüssigkeit in Verbindung steht. Über diese Bohrung 23 wird Bremsflüssigkeit aus dem Vorratsbehälter 26 über ein Zentralventil 28 im Hauptzylinderkolben in eine erste Bremskammer 27 geleitet. Beim Druck auf den Hauptzylinderkolben 8 schließt dieses Zentralventil 28, so daß die in der ersten Bremskammer 27 vorhandene Bremsflüssigkeit über eine Bremsleitung 29 zu entsprechenden, schematisch dargestellten Radbremszylindern 30 gelangen kann. Beim Nachlassen des Bremsdruckes wird das Zentralventil 28 in bekannter Weise durch einen Stift 31 offen gehalten, so daß die ggfs. unter Druck stehende Bremsflüssigkeit über die Bohrung 23 sowie einen entsprechenden Schlitz 32, in dem auch der Stift 31 gleitet und das Zentralventil 28 in die erste Bremskammer 27 gelangen kann.

Stirnwärtig stützt sich der Hauptzylinderkolben 8 über eine Rückstellfeder 33 in der ersten Bremskammer 27 gegen einen weiteren Hauptzylinderkolben 34 ab, welcher ebenfalls in der Stufenbohrung 18 gleitbar gelagert ist. Dabei bildet dieser Hauptzylinderkolben 34 mit dem Hauptzylindergehäuse 1 eine zweite Bremskammer 35 aus, wobei in dieser zweiten Bremskammer 35 ebenfalls eine Rückstellfeder 36 vorgesehen ist. Dieser Hauptzylinderkolben 34 besitzt ebenfalls ein Zentralventil 37, welches ähnlich dem Zentralventil 28 ausgebildet ist. Auch dieses Zentralventil 37 wird in Ausgangslage des Kolbens 34 in bekannter Weise durch einen Stift 38 offen gehalten.

Über dieses Zentralventil 37 kann die zweite Bremskammer 35 mit Bremsflüssigkeit aus einer weiteren Kammer 39 des Vorratsbehälters 26 versorgt werden, wozu eine entsprechende Leitung 40 und Bohrung 41 zu einem Ringraum 42 vorgesehen ist, welcher sich zwischen zwei Kolbenringteilen des Hauptzylinderkolbens 34 befindet. Diese Kolbenringteile stützen sich über entsprechende Dichtringe 43 und 44 gegen die Stufenbohrung 18 ab.

Die zweite Bremskammer 35 steht im übrigen über eine entsprechende Bremsleitung 45 mit Radbremszylindern 46 in Verbindung.

Achsparallel zur Stufenbohrung 18 sind weitere Sacklochbohrungen 47 und 48 vorgesehen, in welchen jeweils ein induktiver Geber 49 bzw. 50 gleitet. Jeden induktiven Geber 49 bzw. 50 umgeben entsprechende Spulenpakete 51 bzw. 52, wobei sich weiterhin jeder induktiver Geber 49 bzw. 50 über eine entsprechende Druckfeder 53 bzw. 54 abstützt.

Der induktive Geber 49 trifft auf einen radialen Fortsatz 55 der Kolbenstange 3, so daß er deren Bewegung aufnimmt. Durch ihn wird ein Ausgangssignal erzeugt und über eine elektrische Leitung 56 zu einer später beschriebenen Elektronik gegeben.

Der andere induktive Geber 50 trifft dagegen auf einen radialen Anschlag 57 des Hauptzylinderkolbens 8 innerhalb des Innenraumes 5. Über ihn wird ebenfalls ein Ausgangssignal über eine elektrische Leitung 58 zu der eben genannten Elektronik erzeugt.

Die weiter unten beschriebene Elektronik 60 steuert zwei Magnetventile 61 und 62 an, wobei das Magnetventil 61 die Zuleitung 14 mit einer weiteren Kammer 63 des Vorratsbehälters 26 für Steuerflüssigkeit verbinden kann, während das Magnetventil 62 eine Verbindung zu einem Druckspeicher 64 für Steuerflüssigkeit herstellt. In die Verbindungsleitung 65 zwischen Druckspeicher 64 und Magnetventil 62 ist über ein Rückschlagventil 66 auch eine Förderpumpe 67 eingeschaltet, mittels welcher Steuerflüssigkeit aus der Kammer 63 zum Druckspeicher 64 bzw. direkt zur Zuleitung 14 gefördert werden kann. Die Förderpumpe 67 ist zur Sicherheit durch einen Bypaß 68 mit einem Druckbegrenzungsventil 69 umgeben.

Die Funktionsweise des erfindungsgemäßen Verstärkers R ist folgende:
Wird eine Bremsbewegung eingeleitet, so bewegt sich die Kolbenstange unter dem Druck der Anlenkstange 4 nach links und verstellt den induktiven Geber 49 gegen den Druck der Druckfeder 53. Hierdurch wird ein Ausgangssignal über die elektrische Leitung 56 zu der Elektronik 60 übertragen, die ihrerseits das Magnetventil 61 schließt und das Magnetventil 62 öffnet. Hierdurch gelangt unter Druck stehende Steuerflüssigkeit aus dem Druckspeicher 64 in die Zuleitung 14, durch die Radialbohrung 13 in den Stellkolbenraum 12. Hierdurch wird der als Servokolben wirkende Hauptzylinderkolben 8 nach links verschoben.

Mit der Bewegung des Hauptzylinderkolbens 8 verstellt sich aber auch der zweite induktive Geber 50, der wiederum über seine elektrische Leitung 58 die Position des als Servokolben wirkenden Hauptzylinderkolbens 8 an die Elektronik meldet. Stimmt der Weg des Hauptzylinderkolbens mit dem vorgegebenen Weg der Kolbenstange (Pedalweg) überein, so werden beide Magnetventile 61 und 62 in Haltestellung, d. h. in Schließstellung gebracht.

Bei einem folgenden Abbau des Bremsdruckes wird über die Elektronik 60 das Magnetventil 61 geöffnet, während das Magnetventil 62 in Schließstellung verbleibt. Nunmehr kann Steuerflüssigkeit aus dem Stellkolbenraum 12 wieder über die Zuleitung 14 zurück in die Kammer 63 des Vorratsbehälters 26 gelangen. Hierdurch ist eine Rückstellung des Hauptzylinderkolbens 8 möglich.

Wie oben beschrieben, ist der Stellkolbenraum 12 über Radialbohrungen 11 mit einer Kammer 10 verbunden, deren Volumen durch den Stößel 6 veränderbar ist. Ein sich im Stellkolbenraum 12 aufbauender Druck hat deshalb auch direkte Wirkung auf diesen Stößel bzw. die Kolbenstange, so daß eine Pedalrückwirkung erzeugt wird.

Es versteht sich von selbst, daß die induktiven Geber 49 und 50 nur beispielhaft sind, es könnten z. B. anstelle dieser induktiven Geber 49 und 50 auch zwei Potentiometer eingesetzt werden.

Es wäre ferner auch eine Ausführungsform mit nur einem induktiven Geber denkbar, jedoch ist bei der Verwendung von zwei induktiven Gebern die Kinematik vereinfacht. Hierbei können die Spulenpakete 51 und 52 feststehend ausgebildet sein und müssen keinen Hub durchführen.

Bei Bremsanlagen mit Antiblockier-Regelsystem mit mindestens einem offenen Regelkreis muß aus Sicherheitsgründen bei der ABS-Regelung der Servo- bzw. Hauptzylinderkolben gegen die Servo- und Fußkraft zurückgestellt werden. In der Regel geschieht dies durch einen zentralen Rückstellkolben, was jedoch zu einer Vergrößerung der Baulänge des gesamten Verstärkers fuhren würde.

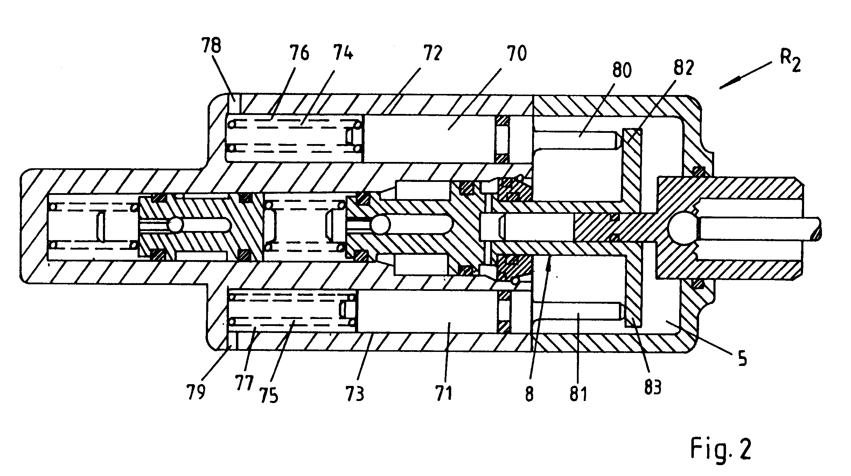

Erfindungsgemäß sind im vorliegenden Ausführungsbeispiel R2 gemäß Figur 2 zwei parallel liegende Rückstellkolben 70 und 71 vorgesehen, welche in weiteren achsparallelen Sacklochbohrungen 72 und 73 gleiten. Diese Rückstellkolben 70 und 71 stützen sich einerseits gegen Rückstellfedern 74 und 75 ab, die sich in Rückstellkammern 76 und 77 befinden. Diese Rückstellkammern 76 und 77 werden über entsprechende Anschlußbohrungen 78 und 79 von einer Rückstellflüssigkeit gespeist, so daß bei ABS-Regelung die Rückstellkolben 70 und 71 nach rechts geführt werden. Dabei treffen sie mit entsprechenden Stiften 80 und 81 auf weitere radiale Anschläge 82 und 83, welche dem Hauptzylinderkolben 8 in dem Innenraum 5 angeformt sind.

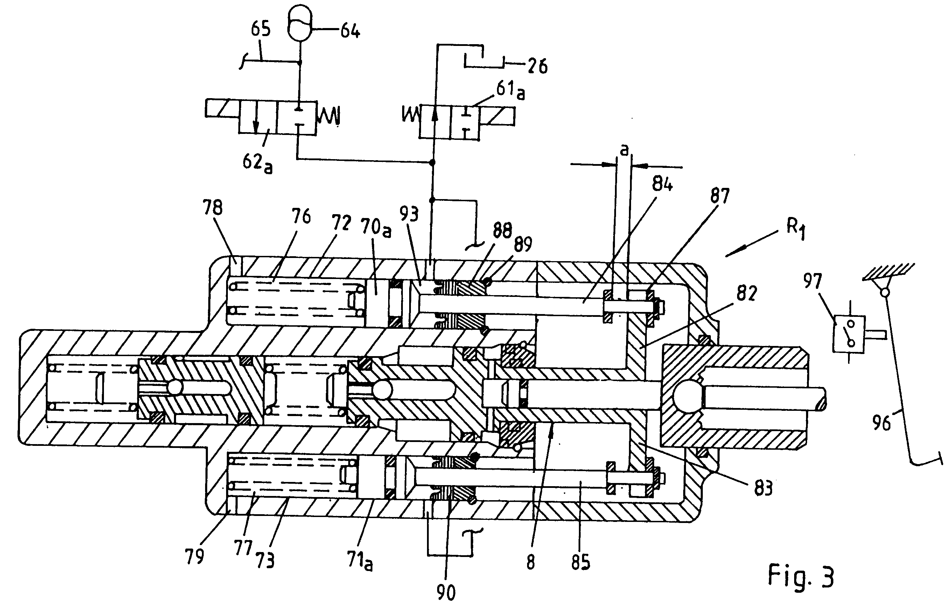

In Figur 3 ist ein Verstärker R1 gezeigt, bei welchem gleichzeitig eine Antriebsschlupfregelung ohne Pedalrückwirkung vollzogen werden kann. Dieser Verstärker R1 ist im wesentlichen so ausgebildet, wie dies zu Figur 1 beschrieben ist. Ferner sind wiederum zwei Rückstellkolben 70a und 71a vorgesehen, wie dies zu Figur 2 beschrieben ist. Allerdings sind diese Rückstellkolben 70a und 71a über eine Stößelstange 84 und 85 fest mit den Anschlägen 82 und 83 verbunden, wobei allerdings zwischen zwei jeweils vorgesehenen Anschlagscheiben 86 und 87 ein Leerhub a der Rückstellkolben 70a und 70b gestattet ist.

Die Stößelstangen 84 und 85 durchdringen jeweils eine Verschlußbuchse 88 in der jeweiligen Sacklochbohrung 72 bzw. 73. Die Verschlußbuchse 88 wird über einen Sprengring 89 in Position gehalten.

Auf die Verschlußbuchse 88 folgt eine Lippendichtung 90, welche mit dem Rückstellkolben 70a bzw. 71a jeweils eine Arbeitskammer 93 für die ASR-Regelung ausbildet.

Die ASR-Regelung wird bevorzugt über zwei Magnetventile 61a und 62a gesteuert. Diese Magnetventile 61 und 62 sind dann auch an den Druckspeicher 64 entsprechend Figur 1 oder an einem sonstigen Rücklauf angeschlossen. Es ist aber auch eine von dem Steuerkreislauf getrennte Anordnung denkbar.

In Figur 3 ist ein Schaltzustand der Magnetventile 61a und 62a gezeigt, wie er normalerweise außerhalb der ASR-Regelung ist. Das Magnetventil 62a ist geschlossen, während das Magnetventil 61a den Rückfluß von Druckmedium aus der Arbeitskammer 93 zu beispielsweise dem Vorratsbehälter 26 gestattet.

Bei ASR-Regelung werden beide Ventile umgeschaltet, so daß dann über das Magnetventil 62a entsprechend Steuerflüssigkeit in die Arbeitskammer 93 gelangen kann.

Da die Magnetventile 61 und 62, zu denen lediglich die Leitung 65 angedeutet ist, bei ASR-Betrieb ungeschaltet bleiben, herrscht im Stellkolbenraum 12 ein Druck von Null, d. h. es wirkt keine Druckkraft auf das Fußpedal 96. Möchte der Fahrer während einer ASR-Regelung bremsen, kann er zunächst ohne großen Kraftwiderstand das Fußpedal 96 betätigen und über einen Schalter 97 die ASR-Regelung abschalten. Damit die Kolbenstange 3 in diesem Fall nicht einfach bis zum Auftreffen auf dem Hauptzylinderkolben 8 durchfällt, kann über die Magnetventile 61 und 62 durch Pulsen ein Zwischendruck in der Stellkolbenkammer 12 aufgebaut werden.

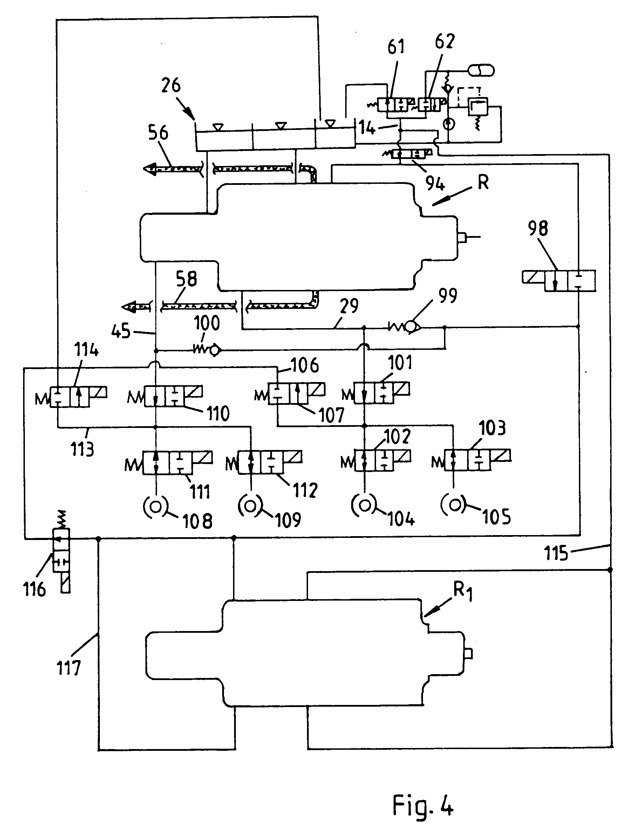

In Figur 4 ist die Einbindung des erfindungsgemäßen Verstärkers in eine Bremsanlage gezeigt, wobei hier die beiden Schnittebenen des Verstärkers entsprechend Figur 1 und Figur 3 getrennt dargestellt sind. Ferner ist ein Magnetventil 98 in der Verbindung zur Bremsleitung 29 bzw. 45 unter Einschaltung von zwei Rückschlagventilen 99 und 100 vorgesehen. Die Bremsleitung 29 führt im übrigen über ein aus der ABS-Regelung bekanntes Hauptzylinder-Absperr-ventil 101 sowie Radventile 102 und 103 zu den Radbremszylindern 104 und 105 des linken und rechten Vorderrades. Die Rückleitung 106 zum Vorratsbehälter 26 ist ebenfalls durch ein Druckabbauventil 107 belegt.

Ebenso sind zwischen die Radbremszylinder 108 und 109 des linken und rechten Hinterrades und die zweite Bremskammer 35 in die Bremsleitung 45 ein Hauptzylinder-Absperrventil 110, Radventile 111 und 112, sowie in die Rückleitung 113 ein Druckabbauventil 114 eingeschaltet.

In der Schnittebene für die ASR-Regelung steht der Verstärker R1 bzw. die hier nicht gezeigte Arbeitskammer 93 über die Leitung 115 direkt mit der Leitung 14 vor den Magnetventilen 61 und 62 in Verbindung. Hierdurch unterstützen im Servofall die mit dem Hauptzylinderkolben 8 verbundenen Rückstellkolben 70 und 71 die Tätigkeit dieses als Servokolben wirkenden Hauptzylinderkolbens 8, da alle entsprechenden Kammern 12 bzw. 93 mit Druck beaufschlagt werden.

Bei ASR-Regelung wird dagegen ein in die Leitung 14 eingeschaltetes Ventil 94 geschlossen und die Magnetventile 61 und 62 übernehmen die Regelung. Der Stellkolbenraum 12 damit drucklos. Ein weiteres Auslaßventil 116, welches in eine Rücklaufleitung 117 für die Rückstellkammern 76 und 77 eingeschaltet ist, wird ebenfalls offen gehalten.

Damit ist gewährleistet, daß nur die Rückstellkolben 70 und 71 über die Arbeitskammer 93 mit Druck beaufschlagt werden können, wenn die Magnetventile 61 und 62 entsprechend geschaltet sind.

Die ABS-Regelung geschieht dagegen vor allem über das Einspeisventil 98, wobei das Auslaßventil 116 geschlossen ist. Über das Magnetventil 98 werden sowohl die Rückstellkammern 76 und 77 wie auch über die Rückschlagventile 99 und 100 die Bremskammern 27 und 35 unter Druck gesetzt. Beim Druckaufbau sind somit die Ventile 101, 102, 103 sowie 110, 111, 112 offen und die Druckabbauventile 114 bzw. 107 geschlossen Zum Halten des Bremsdruckes werden die Radventile 102, 103 und 111, 112 geschlossen. Beim Druckabbau werden dann wieder die Radventile 102, 103 sowie 111, 112 und auch die Druckabbauventile 107 und 114 geöffnet, während die Hauptzylinder-Absperrventile 101 und 110 geschlossen sind.

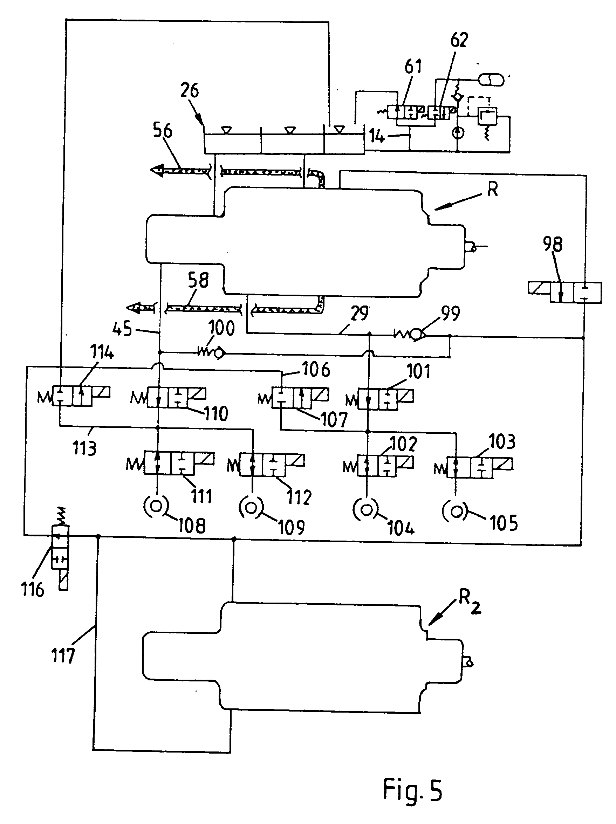

Selbstverständlich ist auch eine ASR-Regelung mit dem Verstärker aus Figur 1 und Figur 2 denkbar, wobei dann zur ASR-Regelung der Stellkolbenraum 12 benutzt wird. Hierbei entfällt die Leitung 115 sowie das Magnetventil 94. Die Steuerung der ASR-Regelung wird von den Magnetventilen 61 und 62 übernommen. Nachteilig wirkt sich hierbei aus, daß der Fahrer zum Wegschalten der ASR-Regelung gegen ein hartes Pedal drücken muß. Dieses entsprechende Blockschaltbild ist in Figur 5 dargestellt.

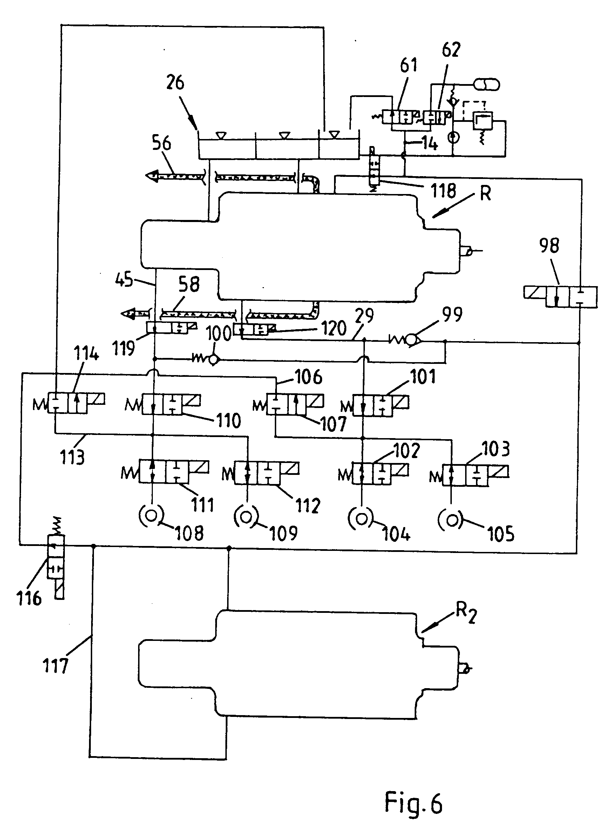

In Figur 6 ist die ASR-Regelung durch Einspeisung gezeigt. Hierzu ist in die Leitung 14 zum Stellkolbenraum 12 hin ein weiteres Magnetventil 118 eingeschaltet Im Falle der ASR-Regelung sperrt dieses Magnetventil die Leitung 14 zum Stellkolbenraum 12 hin ab, während das Magnetventil 98 öffnet. Ferner verschließen zwei weitere Magnetventile 119 und 120 in der Bremsleitung 29 bzw. 45 die erste Bremskammer 27 und zweite Bremskammer 35 ab. Eine Speisung der Radbremszylinder 104, 105, 108 und 109 findet dann über die Rückschlagventile 99 bzw. 100 und die entsprechend nachgeschalteten Magnetventile statt.

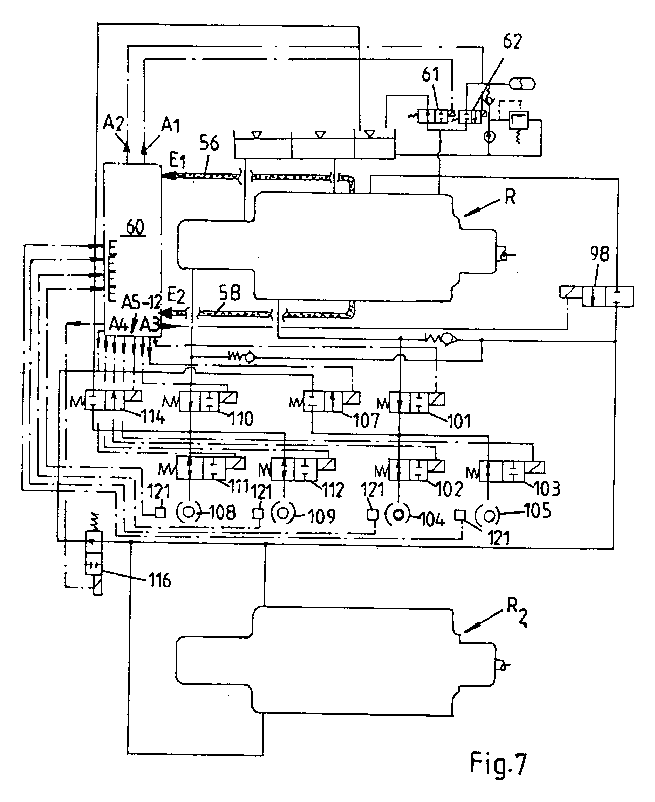

In Figur 7 ist die elektronische Steuerung einer Bremsanlage entsprechend Figur 5 dargestellt. Dies soll nur beispielhaft sein, eine ähnliche Darstellung ist auch für die Ausführungsbeispiele gemäß Figur 4 oder Figur 6 möglich. Die Elektronik 60 erhält über die elektrischen Leitungen 56 bzw. 58 die entsprechenden Eingangssignale E1 und E2 von den induktiven Gebern 49 bzw. 50. Diese Eingangssignale gelangen nach Verarbeitung in der Elektronik über Ausgänge A1 und A2 zu den Magnetventilen 61 bzw. 62.

Jedem der Radbremszylinder 104, 105, 108 und 109 ist ein Radsensor 121 zugeordnet, deren Signale über die Eingänge E3, E4, E5 und E6 in die Elektronik gelangen. Nach Verarbeitung dieser Signale in der Elektronik 60 werden zum einen über die Ausgänge A3 und A4 die Magnetventile 98 und 116 gesteuert. Ferner übernimmt jeder der Ausgänge A5 bis A12 die Ansteuerung eines der Ventile 101 bis 103, 107, 110 bis 112 und 114.

## Patentansprüche

1. Bremsanlage mit einem als hydraulischer Verstärker (R, R1) ausgebildeten und in einem Gehäuse (1, 2) angeordneten Hauptbremszylinder (1, 8), welcher über eine Kolbenstange (3) mit einem Bremspedeal betätigbar ist, welche zumindest einen Hauptzylinderkolben (8) beaufschlagt, über den zumindest eine Bremskammer (27) unter Bremsdruck setzbar ist, so daß Bremsflüssigkeit über Bremsleitungen (29) zu entsprechenden Radbremszylindern (30) gelangt, wobei dem Hauptzylinderkolben (8) ferner ein Stellkolbenraum (12) zugeordnet ist, der über ein Magnetventil (62) mit einer Einrichtung (67) zur Zuführung von Steuerflüssigkeit in Verbindung steht, wobei dieses Magnetventil (62) über einen die Bewegung der Kolbenstange (3) erfassenden Geber (49) gesteuert ist, dadurch gekennzeichnet, daß der Hauptbremszylinderkolben (8) ausgehend von seiner Ausgangsstellung relativ zur stillstehenden Kolbenstange (3) in eine arbeitsseitige Endstellung bewegbar ausgebildet ist, daß ein zweiter Geber (5) vorhanden ist, daß der erste Geber (49) am Gehäuse (1) befestigt ist und zur Messung des längstmöglichen Weges der Kolbenstange (3) zum Gehäuse (1) eingerichtet ist, daß der zweite Geber (50) ebenfalls am Gehäuse (1) befestigt ist und zur Messung des längstmöglichen Weges des Hauptzylinderkolbens (8) relativ zum Gehäuse (1) eingerichtet ist, und daß eine an die beiden Geber (49, 50) angeschlossene Elektronik (60) eingerichtet ist zur Steuerung des Hauptzylinderkolbens (8) über das Magnetventil (61, 62, 61a, 62a) relativ zur Kolbenstange (3).

2. Bremsanlage nach Anspruch 1, dadurch gekennzeichnet, daß über das Magnetventil (61,62) der Stellkolbenraum (12) bzw. dessen Zuleitung (14) entweder mit einem Vorratsbehälter (26) für Steuerflüssigkeit oder mit einem Druckspeicher (64) bzw. einer Förderpumpe (67) für Steuerflüssigkeit verbindbar oder gänzlich absperrbar ist.

3. Bremsanlage nach Anspruch 1 oder 2, dadurch gekennzeichnet, daß von der Elektronik (60) weitere Magnetventile (61a,62a) angesteuert sind, welche einen Arbeitsraum (93) zu einer Antriebsschlupfregelung mit einem Druckspeicher (64) für ein Druckmedium verbinden.

4. Bremsanlage nach Anspruch 2 oder 3, dadurch gekennzeichnet, daß das Magnetventil aus einem in die Leitung zwischen Stellkolbenraum (12) und Vorratsbehälter (26) eingeschalteten 2/2-Wege-Magnetventil (61 bzw. 61a) und einem in die Leitung zwischen Druckspeicher (64) bzw. Förderpumpe (67) und Stellkolbenraum (12) eingeschalteten 2/2-Wege-Magnetventil (62 bzw. 62a) besteht.

5. Bremsanlage nach einem der Ansprüche 1 bis 4, dadurch gekennzeichnet, daß beide Geber (49 und 50) als induktive Geber ausgestaltet sind.

6. Bremsanlage nach einem der Ansprüche 1 bis 4, dadurch gekennzeichnet, daß beide Geber (49 und 50) als Potentiometer ausgestaltet sind.

7. Bremsanlage nach Anspruch 5, dadurch gekennzeichnet, daß im Gehäuse (1,2) achsparallel zur Hauptzylinderbohrung (18) Sacklochbohrungen (47,48) vorgesehen sind, in denen sich Spulenpakete (51,52) befinden, welche von den Gebern (49,50) durchsetzt sind.

8. Bremsanlage nach Anspruch 7, dadurch gekennzeichnet, daß sich beide Geber (49,50) in ihrer Sacklochbohrung (47,48) gegen Druckfedern (53,54) abstützen.

9. Bremsanlage nach Anspruch 8, dadurch gekennzeichnet, daß der Geber (49) andernends der Druckfeder (53) auf einen Fortsatz (55) der Kolbenstange (3) und der Geber (50) auf einen Anschlag (57) des Hauptzylinderkolbens (8) trifft.

10. Bremsanlage nach einem der Ansprüche 1 bis 9, dadurch gekennzeichnet, daß dem Hauptzylinderkolben (8) eine Rückstelleinrichtung (70,71) für eine Antiblockierregelung zugeordnet ist.

11. Bremsanlage nach Anspruch 10, dadurch gekennzeichnet, daß die Rückstelleinrichtung aus zumindest einem Rückstellkolben (70 bzw. 71) besteht, welcher unter dem Druck eines Druckmediums Anschläge (82,83) od. dgl. am Hauptzylinderkolben (8) beaufschlagt.

12. Bremsanlage nach Anspruch 11, dadurch gekennzeichnet, daß der Rückstellkolben (70,71) in einer ebenfalls achsparallel zur Hauptzylinderbohrung (18) angeordneten Sacklochbohrung (72 bzw. 73) im Gehäuse (1,2) angeordnet ist, in der sich auch die entsprechende Rückstellkammer (76,77) für das Druckmedium befindet.

13. Bremsanlage nach Anspruch 12, dadurch gekennzeichnet, daß die Rückstellkammer (76,77) über ein Auslaßventil (116) mit dem Vorratsbehälter (26) und über ein Magnet ventil (98) mit der Zuleitung (14) in Verbindung steht.

14. Bremsanlage nach Anspruch 13, dadurch gekennzeichnet, daß das Magnetventil (98) zur ABS-Regelung über Rückschlagventile (99 und 100) auch mit den Bremsleitungen (29 bzw. 45) in Verbindung steht.

15. Bremsanlage nach Anspruch 13 oder 14, dadurch gekennzeichnet, daß zwischen dem Stellkolbenraum (12) und der Verbindung von Rückstellkammer (76,77) und Zuleitung (14) in diese Zuleitung (14) ein Magnetventil (118) und ferner in die Bremsleitung (29 bzw. 45) ein weiteres Magnetventil (119 bzw. 120) eingeschaltet ist.

16. Bremsanlage nach einem der Ansprüche 10 bis 15, dadurch gekennzeichnet, daß die Rückstelleinrichtung (70a bzw. 71a) auch mit einer Antriebsschlupfregelung verbunden ist.

17. Bremsanlage nach Anspruch 16, dadurch gekennzeichnet, daß die Rückstelleinrichtung aus einem Rückstellkolben (70a bzw. 71a) besteht, welcher mit Anschlägen (82,83) am Hauptzylinderkolben (8), ggfs. unter Gewährung eines Leerhubes um den Betrag (a), festliegt.

18. Bremsanlage nach Anspruch 17, dadurch gekennzeichnet, daß der Rückstellkolben (70a bzw. 71a) eine Rückstellkammer (76,77) zur ABS-Regelung von der Arbeitskammer (93) für die ASR-Regelung abteilt.

19. Bremsanlage nach Anspruch 18, dadurch gekennzeichnet, daß die Rückstellkammer (76,77) in einer achsparallel zur Hauptzylinderbohrung (18) angeordneten Sacklochbohrung (72,73) in dem Gehäuse (1,2) gebildet ist, in welcher auch der Rückstellkolben (70a bzw. 71a) gleitet, wobei von dem Rückstellkolben (70a bzw. 71a) aus eine Stößelstange (84,85) eine Lippendichtung (90) und eine Verschlußbuchse (88) durchgreift, bevor sie an dem Anschlag (82,83) festgelegt ist.

20. Bremsanlage nach einem der Ansprüche 18 oder 19, dadurch gekennzeichnet, daß die Rückstellkammer (93) über eine Leitung (115) mit der Zuleitung (14) vor dem Magnetventil (61,62) in Verbindung steht.

21. Bremsanlage nach Anspruch 20, dadurch gekennzeichnet, daß zwischen der Einmündung von Leitung (115) in Zuleitung (14) und dem Stellkolbenraum (12) ein Ventil (94) eingeschaltet ist.

22. Bremsanlage nach einem der Ansprüche 16 bis 21, dadurch gekennzeichnet, daß die ASR-Regelung zur Verhinderung eines Durchfallens des Bremspedals die Steuerelemente (61,62 bzw. 61a,62a) pulsbar sind.

## Claims

1. Brake system with a main brake cylinder (1, 8) configured as a hydraulic booster (R, R1) and arranged in a housing (1, 2), which brake cylinder can be actuated by means of a brake pedal via a piston rod (3), which brake rod acts on at least one main cylinder piston (8), by means of which at least one brake chamber (27) can be placed under brake pressure so that brake fluid reaches corresponding wheel brake cylinders (30) via brake conduits (29), a setting piston space (12) being also associated with the main cylinder piston (8), which setting piston space (12) is connected by means of a magnetic valve (62) to a device (67) for the supply of control fluid, this magnetic valve (62) being controlled by means of a pick-up (49) recording the motion of the piston rod (3), characterised in that the main brake cylinder piston (8) is configured so that, starting from its initial position, it can be moved relative to the stationary piston rod (3) into a working-end, end position, in that a second pick-up (5) is present, in that the first pick-up (49) is fastened to the housing (1) and is equipped to measure the greatest possible displacement of the piston rod (3) relative to the housing (1), in that the second pick-up (50) is also fastened to the housing (1) and is equipped to measure the greatest possible displacement of the main cylinder piston (8) relative to the housing (1) and in that electronics (60) connected to the two pick-ups (49, 50) are equipped to control the main cylinder piston (8) relative to the piston rod (3) by means of the magnetic valve (61, 62, 61a, 62a).

2. Brake system according to Claim 1, characterised in that by means of the magnetic valve (61, 62), the setting piston space (12) or its supply (14) can be either connected to a storage container (26) for control fluid or to a pressure reservoir (64) or a feed pump (67) for control fluid or be shut off completely.

3. Brake system according to Claim 1 or 2, characterised in that further magnetic valves (61a, 62a) are triggered by the electronics (60), which magnetic valves (61a, 62a) connect a working space (93) to a drive slip control system with a pressure reservoir (64) for a pressure medium.

4. Brake system according to Claim 2 or 3, characterised in that the magnetic valve consists of a 2/2-way magnetic valve (61 or 61a) connected into the conduit between the setting piston space (12) and the storage container (26), and of a 2/2-way magnetic valve (62 or 62a) connected into the conduit between the pressure reservoir (64) and the feed pump (67), on the one hand, and the setting piston space (12), on the other.

5. Brake system according to one of Claims 1 to 4, characterised in that both pick-ups (49 and 50) are embodied as inductive pick-ups.

6. Brake system according to one of Claims 1 to 4, characterised in that both pick-ups (49 and 50) are embodied as potentiometers.

7. Brake system according to Claim 5, characterised in that blind holes (47, 48) are provided in the housing (1, 2) with their axes parallel to the axis of the main cylinder bore (18), in which blind holes (47, 48) coil packs (51, 52) are located which are penetrated by the pick-ups (49, 50).

8. Brake system according to Claim 7, characterised in that the two pick-ups (49, 50) are supported in their blind hole (47, 48) by compression springs (53, 54).

9. Brake system according to Claim 8, characterised in that the pick-up (49) at the other end of the compression spring (53) meets an extension (55) of the piston rod (3) and the pick-up (50) meets a stop (57) of the main cylinder piston (8).

10. Brake system according to one of Claims 1 to 9, characterised in that the main cylinder piston (8) is associated with a reset device (70, 71) for an anti-lock control system.

11. Brake system according to Claim 10, characterised in that the reset device consists of at least one reset piston (70 or 71), which acts on stops (82, 83) or the like on the main cylinder piston (8) under the pressure of a pressure medium.

12. Brake system according to Claim 11, characterised in that the reset piston (70, 71) is arranged in a blind hole (72 or 73) in the housing (1, 2), the axis of the blind hole being similarly arranged parallel to the axis of the main cylinder bore (18), in which blind hole (72 or 73) the corresponding reset chamber (76, 77) for the pressure medium is also located.

13. Brake system according to Claim 12, characterised in that the reset chamber (76, 77) is connected to the storage container (26) via an outlet valve (116) and to the supply conduit (14) via a magnetic valve (98).

14. Brake system according to Claim 13, characterised in that for anti-lock brake control, the magnetic valve (98) is also connected to the brake conduits (29 and 45) by means of non-return valves (99 and 100).

15. Brake system according to Claim 13 or 14, characterised in that a magnetic valve (118) is connected into the supply (14) between the setting piston space (12) and the connection from reset chambers (76, 77) to this supply (14) and a further magnetic valve (119 or 120) is additionally connected into the brake conduit (29 or 45).

16. Brake system according to one of Claims 10 to 15, characterised in that the reset device (70a or 71a) is also connected to a drive slip control system.

17. Brake system according to Claim 16, characterised in that the reset device consists of a reset piston (70a or 71a) which is permanently fixed by stops (82, 83) on the main cylinder piston (8), if necessary, while ensuring an idle stroke by the amount (a).

18. Brake system according to Claim 17, characterised in that the reset piston (70a or 71a) divides a reset chamber (76, 77) for the anti-lock brake control system from the working chamber (93) for the anti-slip control system.

19. Brake system according to Claim 18, characterised in that the reset chamber (76, 77) is formed in a blind hole (72, 73) in the housing (1, 2) arranged with its axis parallel to the axis of the main cylinder bore (18), in which blind hole (72, 73) the reset piston (70a or 71a) also slides, whereby, starting from the reset piston (70a or 71a), a push-rod (84, 85) passes through a lip seal (90) and a closing bush (88) before its position is fixed on the stop (82, 83).

20. Brake system according to one of Claims 18 or 19, characterised in that the reset chamber (93) is connected via a conduit (115) to the supply (14) before the magnetic valve (61, 62).

21. Brake system according to Claim 20, characterised in that a valve (94) is connected in between the opening of the conduit (115) into the supply (14) and the setting piston space (12).

22. Brake system according to one of Claims 16 to 21, characterised in that anti-lock brake control the control elements (61, 62 or 61a, 62a) can be pulsed in order to prevent the brake pedal from dropping [sic].

## Revendications

1. Système de freinage avec un maître cylindre de frein (1, 8) constitué comme un amplificateur hydraulique (R, R1) et disposé dans un boîtier (1, 2), qui peut être actionné par une tige de piston (3) par une pédale de frein qui agit au moins sur un piston de maître cylindre (8), au moyen duquel on met au moins une chambre de freinage (27) sous pression, de telle sorte que du liquide de freinage arrive par des canalisations de freinage (29) aux cylindres de freins de roues correspondants (30), une chambre de piston de réglage (12) étant associée en outre au piston de maître cylindre (8), chambre qui est en liaison via une électrovanne (62) avec un dispositif (67) servant à amener du liquide de commande, cette électrovanne (62) étant commandée par un détecteur (49) enregistrant le mouvement de la tige de piston (3), système de freinage caractérisé en ce que le piston de maître cylindre (8) est constitué de façon à pouvoir se déplacer de sa position de départ par rapport à la tige immobile de piston (3) et venir dans une position finale du côté opérationnel, en ce qu'un deuxième détecteur (5) existe, que le premier détecteur (49) est fixé sur le boîtier (1) et est installé pour mesurer le plus long trajet possible de la tige de piston (3) vers le boîtier (1), que le deuxième détecteur (50) est également fixé sur le boîtier (1) et est installé pour mesurer le plus long trajet possible du piston de maître cylindre (8) par rapport au boîtier (1) et qu'une électronique (60) raccordée aux deux détecteurs (49, 50) est installée pour commander le piston de maître cylindre (8) via l'électrovanne (61, 62, 61a, 62a) par rapport à la tige de piston (3).

2. Système de freinage selon la revendication 1, caractérisé en ce que la chambre du piston de réglage (12) ou son arrivée (12) via l'électrovanne (61, 62) peut être reliée soit à un réservoir (26) de liquide de commande, soit à un réservoir de pression (64) ou à une pompe de refoulement (67) de liquide de commande, ou peut être complètement fermée.

3. Système de freinage selon la revendication 1 ou 2, caractérisé en ce que d'autres électrovannes (61a, 62a) sont commandées par l'électronique (60), électrovannes qui relient une chambre de travail (93) à une régulation de patinage avec un réservoir de pression (64) d'agent sous pression.

4. Système de freinage selon la revendication 2 ou 3, caractérisé en ce que l'électrovanne consiste en une électrovanne (61 ou 61a) ou distributeur à 2/2 voies montée dans la canalisation entre la chambre de piston de réglage (12) et le réservoir (26) et en une électrovanne (62 ou 62a) ou distributeur à 2/2 voies montée dans la canalisation entre le réservoir de pression (64) ou la pompe de refoulement (67) et la chambre du piston de réglage (12).

5. Système de freinage selon l'une des revendications 1 à 4, caractérisé en ce que les deux détecteurs (49, 50) sont constitués comme des détecteurs inductifs.

6. Système de freinage selon l'une des revendications 1 à 4, caractérisé en ce que les deux détecteurs (49 et 50) sont constitués comme des potentiomètres.

7. Système de freinage selon la revendication 5, caractérisé en ce que dans le boîtier (1, 2) sont prévus des trous borgnes (47, 48) à axes parallèles à l'alésage du maître cylindre (18), trous borgnes dans lesquels se trouvent des paquets de bobines (51, 52) qui sont traversés par les détecteurs (49, 50).

8. Système de freinage selon la revendication 7, caractérisé en ce que les deux détecteurs (49, 50) s'appuient dans leurs trous borgnes (47, 48) contre des ressorts de pression (53, 54).

9. Système de freinage selon la revendication 8, caractérisé en ce que le détecteur (49) atteint à l'autre extrémité du ressort de pression (53) un prolongement de la tige de piston (3) et le détecteur (50) une butée (57) du piston de maître cylindre (8).

10. Système de freinage selon l'une des revendications 1 à 9, caractérisé en ce qu'un dispositif de remise à l'état initial (70, 71) est associé au piston du maître cylindre (8) pour une régulation anti-blocage.

11. Système de freinage selon la revendication 10, caractérisé en ce que le dispositif de remise à la position initiale consiste au moins en un piston de remise à la position initiale (70 ou 71) qui, sous la pression d'un agent sous pression, agit sur des butées (82 ou 83) ou analogues sur le piston du maître cylindre (8).

12. Système de freinage selon la revendication 11, caractérisé en ce que le piston de remise à l'état initial (70, 71) est disposé dans un trou borgne (72 ou 73) disposé également avec l'axe parallèle à l'alésage (18) du maître cylindre dans le boîtier (1, 2), dans lequel se trouve aussi la chambre correspondante de remise à l'état initial (76, 77) pour l'agent sous pression.

13. Système de freinage selon la revendication 12, caractérisé en ce que la chambre de remise à l'état initial (76, 77) est en liaison par une soupape de vidange (116) avec le réservoir (26) et par une électrovanne (28) avec l'arrivée (14).

14. Système de freinage selon la revendication 13, caractérisé en ce que l'électrovanne (98) est en liaison, pour la régulation ABS via des clapets de non retour (99 et 100), aussi avec des canalisations de freinage (29 ou 45).

15. Système de freinage selon la revendication 13 ou 14, caractérisé en ce qu'entre la chambre du piston de réglage (12) et la liaison des chambres de remise à l'état initial (76, 77) et de la canalisation (14) est montée une électrovanne (118) dans cette canalisation (14) et en outre dans la canalisation de freinage (29 ou 45) est montée une électrovanne (119 ou 120).

16. Système de freinage selon l'une des revendications 10 à 15, caractérisé en ce que le dispositif de remise à l'état initial (70a ou 71a) est aussi relié à une régulation de patinage.

17. Système de freinage selon la revendication 16, caractérisé en ce que le dispositif de remise à l'état initial consiste en un piston de remise à l'état initial (70a ou 71a) qui est immobilisé par des butées (82, 83) sur le piston du maître cylindre (8), le cas échéant en assurant une course à vide d'une amplitude (a).

18. Système de freinage selon la revendication 17, caractérisé en ce que le piston de remise à l'état initial (70a ou 71a) compartimente une chambre de remise à l'état initial (76, 77) par la régulation ABS par rapport à la chambre de travail (93) pour la régulation ASR.

19. Système de freinage selon la revendication 18, caractérisée en ce que la chambre de remise à l'état initial (76, 77) est formé dans le boîtier (1, 2) dans un trou borgne (72, 73) disposé avec l'axe parallèle à l'alésage du maître cylindre (18), trou dans lequel glisse aussi le piston de remise à l'état initial (70a ou 71a), une tige de poussoir (84, 85) traversant à partir du piston de remise à l'état initial (70a ou 71a) un joint d'étanchéité à lèvres (90) et une douille de fermeture (88), avant d'être immobilisée sur la butée (82, 83).

20. Système de freinage selon l'une des revendications 18 ou 19, caractérisé en ce que la chambre de remise à l'état initial (93) est en liaison par une canalisation (115) avec la conduite (14) avant l'électrovanne (61, 62).

21. Système de freinage selon la revendication 20, caractérisé en ce qu'on monte une soupape (94) entre l'embouchure de la canalisation (115) dans l'arrivée (14) et la chambre du piston de réglage (12).

22. Système de freinage selon l'une des revendications 16 à 21, caractérisé en ce que dans le cas de la régulation ASR pour empêcher un enfoncement de la pédale de frein, les éléments de commande (61, 62 ou 61a, 62a) sont pulsables.
